# EUROPÄISCHE PATENTSCHRIFT

(11) **EP 0 603 574 B1**
(45) Veröffentlichungstag und Bekanntmachung des Hinweises auf die Patenterteilung: **11.09.1996**
(21) Anmeldenummer: 93118966.6
(22) Anmeldetag: 25.11.1993
(51) Int. Cl.: B62D 21/12

(54) **Kraftfahrzeug mit die Karosserie versteifenden Elementen**
Motor vehicle with body-strengthening assemblies
Véhicule à moteur avec éléments de renfort de la carosserie

(30) Priorität: 24.12.1992 DE 4244216; 01.06.1993 DE 4318226
(43) Veröffentlichungstag der Anmeldung: 29.06.1994
(73) Patentinhaber: Dr.Ing.h.c. F. Porsche Aktiengesellschaft, D-70435 Stuttgart (DE)
(72) Erfinder: Schoderer, Sigrid, 75203 Königsbach-Stein (DE); Wöhler, Hans-Jürgen, D-70565 Stuttgart (DE)

(56) Entgegenhaltungen:
- EP-A- 0 295 662
- DE-C- 592 840
- DE-C- 1 177 016
- US-A- 1 948 744
- US-A- 2 177 896

## Beschreibung

Die Erfindung bezieht sich auf ein Kraftfahrzeug nach dem Oberbegriff des Anspruchs 1. Ein derartiges Kraftfahrzeug ist aus der Patentschrift DE-C-11 77 016 bekannt.

Bei einer Ausführung nach der DE 42 44 216.8, die die Prioritätsanmeldung der vorliegenden Anmeldung ist, sind die in einer horizontalen Ebene verlaufenden und V-förmig angeordneten Einzelstreben jeweils aus einem Stück bestehend ausgeführt. Mit einem Ende sind die Einzelstreben jeweils am Schweller des Fahrzeugaufbaus und mit ihrem anderen Ende sind sie mit den in einer vertikalen Ebene angeordneten, weiteren V-förmig angeordneten Einzelstreben verbunden. Zur Aufnahme und Abstützung von Lenkerlagerungen dient ein seitliches Trägerteil, daß zwischen den Einzelstreben und dem Fahrzeugaufbau bzw. den Längsträgern des Aufbaus vorgesehen ist und das zwischen sich eine Öffnung zur Durchführung einer Gelenkwelle bildet. Mit diesem Trägerteil sind die horizontal angeordneten Einzelstreben in der Weise verbunden, daß ein Festigkeitsverbund zum Fahrzeugaufbau herstellbar ist.

Aufgabe der Erfindung ist es, ein Kraftfahrzeug mit den Fahrzeugaufbau versteifenden Streben zu schaffen, die in einfacher Weise zu montieren sind, den Ein- und Ausbau einer Gelenkwelle vereinfachen, sowie eine lagegenaue Aufnahme von Lenkern einer Radaufhängung, auch bei auf das Rad einwirkende Kräften gewährleistet.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß gegenüber der DE 42 44 216.8 und der DE-C-11 77 016 die seitlichen Trägerteile derart mit den Längsträgern des Aufbaues verbunden sind, daß nach einem Entfernen eines Teilstücks einer Einzelstrebe, die Gelenkwelle ein- bzw. wegbaubar ist. Desweiteren ist eine Befestigung von Teilstücken aufgrund der geringeren Baulänge einfacher als eine einteilige Strebe vorzunehmen.

Die Teilstücke der Einzelstreben sind unter einem stumpfen Winkel zueinander angeordnet, was durch den gemeinsamen Befestigungspunkt zwischen den horizontalen und den vertikal angeordneten Einzelstreben erforderlich ist.

Insbesondere ist das eine - in bezug auf die Fahrtrichtung - vornliegende Teilstück der horizontal angeordneten Einzelstrebe über zwei Befestigungen mit dem einen säulenartigen Schenkel und über eine weitere endseitige Befestigung mit dem weiteren säulenartigen Schenkel des Trägerteiles verbunden.

Hierdurch wird ein verwindungssteifes Trägerteil gebildet, das eine lagegenaue Position für die Radführungslenker in Lagern der säulenartigen Schenkel des Trägerteiles gewährleistet, wobei auf das Rad einwirkende Kräfte keine Veränderung der Lageposition bzw. eine Verwindung des Trägerteils bewirken können.

Des weiteren ist - in bezug auf die Fahrtrichtung - das hintenliegende Teilstück der horizontalen Einzelstrebe am Fuß des säulenartigen Schenkels gemeinsam mit einem Querträger über eine einzige Schraube verbunden, wobei die freien Enden der Teilstücke mit den vertikalen Einzelstreben verbunden sind und somit eine Abstützung zwischen den Längsträgern gewährleistet wird.

Die seitlichen Trägerteile sind beispielsweise als Gußteile ausgeführt und weisen neben den integrierten Lageraufnahmen für die Radführungslenker auch jeweils eine Aufnahme für ein Getriebelager sowie eine Aufnahme für einen Stabilisatorlager auf, wobei auch Anformungen zur Befestigung eines weiteren Querträgers vorgesehen sind.

Die Teilstücke der horizontalen Einzelstrebe bestehen beispielsweise aus einem im Querschnitt offenen U-Profil oder einem Hutprofil. Die vertikalen Einzelstreben bestehen dagegen aus einem Rohr oder einer profilierten Strebe.

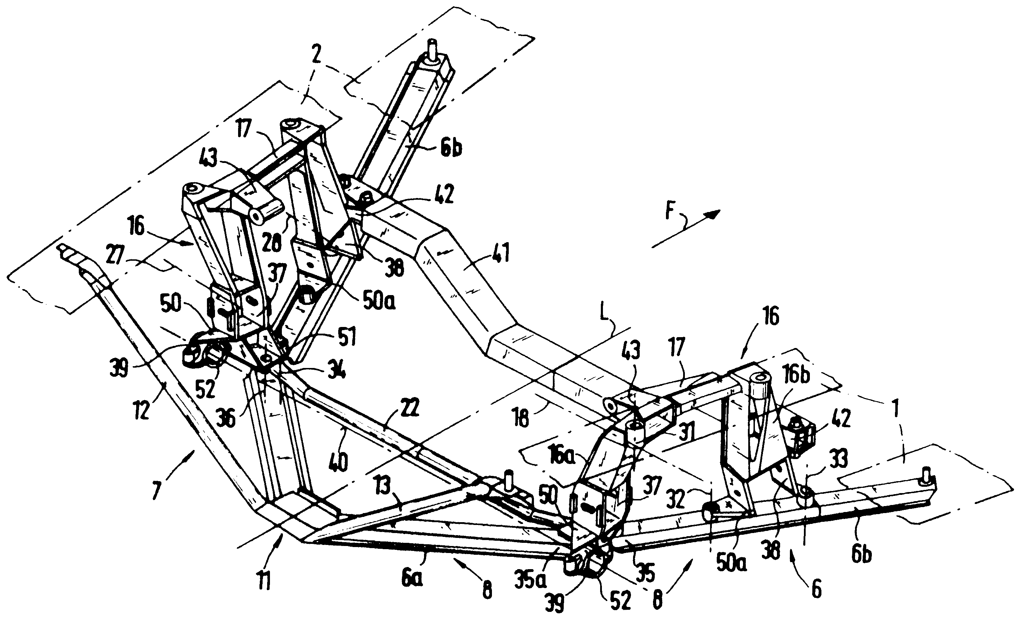

Ein Ausführungsbeispiel der Erfindung ist in der Zeichnung dargestellt und wird im folgenden näher beschrieben. Die Zeichnung zeigt eine schaubildliche Darstellung der beiden über Querträger miteinander verbundenen Trägerteile mit befestigten horizontalen und vertikalen Einzelstreben.

An einem Traggerüst T für eine Hinterachse eines Kraftfahrzeugs ist einerseits eine Radaufhängung bestehend aus mehreren Lenkern 27, 28 gelagert und andererseits wird eine Versteifung des Fahrzeugaufbaus erzielt.

Das Traggerüst T umfaßt im wesentlichen jeweils zwei seitliche Trägerteile 16, die mit Längsträgern 1, 2 des Fahrzeugaufbaus verbunden sind und an denen im Bereich des Unterbodens V-förmig angeordnete Vertrebungen 6, 7 befestigt sind. Diese bestehen aus einer ersten V-förmigen Verstrebung 6, die in einer etwa horizontalen Ebene verläuft und sich in Fahrzeuglängsrichtung erstreckt. Eine weitere V-förmige Verstrebung 7 ist in einer etwa vertikalen Ebene angeordnet. Beide Verstrebungen 6 und 7 bestehen aus Einzelstreben 8 und 9, die als Profile, Stangen, Rohre oder dergleichen Mittel ausgebildet sind. Im zusammentreffenden Bereich 11 sind die Einzelstreben 8, 9 miteinander verbunden. Die Verstrebung 6 besteht jeweils aus zu den Einzelstreben 8, 9 zusammengesetzten Teilstücken 6 a und 6 b, wobei die Verstrebung 7 ebenfalls aus zu den Einzelstreben zusammengesetzten Teilstücken 12, 13 oder einem durchgehenden Element bestehen kann.

Das Trägerteil 16 ist U-förmig mit zwei beabstandeten säulenartigen Schenkeln 16 a und 16 b ausgebildet, die über einen Steg 17 miteinander zu einem Bauteil verbunden sind. Dieser ist einem Längsträger 1, 2 zugerichtet und an diesem über zwei Schrauben 30, 31 verbunden.

Die säulenartigen Schenkel 16 a und 16 b sind profiliert ausgeführt und am Fuß 50, 50a mit Aufnahmen für Verbindungsschrauben 32, 33 und 34 versehen. Über die Schrauben 32, 33 ist ein erstes Teilstück 6 b der Verstrebung 6 am Fuß 50a des Schenkels 16 b des Trägerteils 16 befestigt.

Ein freies nach vorn ragende eine Ende 34 dieses Teilstückes 6 b ist mit dem Längsträger 1 verbunden, wobei das weitere nach hinten ragende Ende 35 über die Verbindungsschraube 34 am Schenkel 16 a des Trägerteils 16 gehalten wird.

Das unmittelbar anschließende Teilstück 6 a der Verstrebung 6 wird über eine Schraube 36 mit dem Schenkel 16 a verbunden, über die gleichzeitig ein Querträger 22 befestigbar ist. Im zusammentreffenden Bereich 11 der V-förmig zusammentreffenden Teilstücke 6 a werden diese mit dem Teilstück 12, 13 verbunden, so daß sich ein Festigkeitsverbund ergibt. Diese Teilstücke 12, 13 können beispielsweise auch aus einem durchgehend einteiligen Rohr, einer Stange, einem Profil oder dgl. bestehen.

Im Trägerteil 16 ist neben Aufnahmen 37, 38 für Lager von Lenkerarmen 27, 28 auch eine Halterung 39 für einen querverlaufenden Stabilisator 40 angeformt. Dieser wird über eine anschraubbare Schelle 52 gehalten.

Zur Verbindung des Trägerteiles 16 mit einem weiteren Querträger 41 ist der eine säulenförmige Schenkel 16 b mit einem Ansatz 42 zur Abstützung und Festlegung versehen. Desweiteren ist in der Ebene des Steges 17 eine Aufnahme 43 für ein Getriebelager angeformt, die sich nach innen erstreckt.

Die Teilstücke 6 a und 6 b der horizontalen Verstrebung 6 sind im Bereich des Schenkels 16 a unter einem stumpfen Winkel zueinander angeordnet, so daß das Ende 44 des einen Teilstückes 6 a dem Verbindungsbereich 11 zuführbar ist. Das Traggerüst T ist in seiner Gesamtheit mit Lenkerarmen 27, 28 vormontierbar und als Einheit am Fahrzeugaufbau zu befestigen. Die Verbindung des Teilstücks 6 b mit den beiden Schenkeln 16 a und 16 b des Trägerteiles 16 wirkt sich versteifend auf dieses Teil aus, so daß auch bei auf das Rad einwirkenden Kräften, wie beispielsweise Seitenkräfte, diese abstützbar sind, ohne daß eine Verwindung des Trägerteils 16 bzw. desAufbaues erfolgen kann.

## Patentansprüche

1. Kraftfahrzeug mit äußeren seitlichen Längsträgern im Bereich einer Fahrgastzelle, an die sich im Fahrzeugvorbau und/oder im Fahrzeugheck weitere Längsträger anschließen, die insbesondere mit einer Abkröpfung versehen sind und die Fahrzeugkarosserie versteifende Elemente mit den Längsträgern einerseits und/oder einem Unterboden bzw. Unterbodenbauteilen andererseits verbunden sind, wobei das versteifende Element aus einer ersten V-förmigen Verstrebung besteht, welche in einer horizontalen Ebene verläuft und sich in Fahrzeuglängsrichtung erstreckt und mit einer zweiten V-förmigen Verstrebung verbunden ist, die in einer etwa vertikalen Querebene angeordnet ist, wobei die erste Verstrebung mit ihren freien Enden mit den Längsträgern und mit ihren abgekehrten Enden an der zweiten Verstrebung in einem gemeinsamen zusammentreffenden Bereich befestigt ist und diese zweite Verstrebung sich mit ihren freien Enden an den Längsträgern abstützt, **dadurch gekennzeichnet**, daß die erste V-förmige Verstrebung (6) jeweils aus zwei Teilstücken (6 a, 6 b) zusammengesetzte Einzelstreben (8, 9) umfaßt, deren zusammenstoßende Enden (35 und 35 a) in einem U-förmigen Trägerteil (16) gehalten sind, das sich in Fahrzeuglängsrichtung erstreckt.

2. Kraftfahrzeug nach Anspruch 1, **dadurch gekennzeichnet**, daß das Trägerteil (16) zwei den Einzelstreben (8, 9) zugerichtete säulenartige Schenkel (16 a, 16 b) aufweist und der die beiden Schenkel miteinander verbindende Steg (17) am Längsträger (1) abgestützt und mit diesem über Befestigungsmittel (30, 31) verbunden ist.

3. Kraftfahrzeug nach den Ansprüchen 1 oder 2, **dadurch gekennzeichnet**, daß mit einem Fuß (50) des einen - in bezug auf die Fahtrichtung F - hintenliegenden Schenkels (16 a) über eine Befestigungsschraube (36) gleichzeitig das eine Teilstück (6 a) der Einzelstrebe (8, 9) sowie eine Querstrebe (22) verbunden ist und das andere vornliegende Teilstück (6 b) in einer Aufnahme (51) des Schenkels (16 a) über eine weitere Befestigungsschraube (34) festsetzbar ist.

4. Kraftfahrzeug nach den Ansprüchen 1, 2 oder 3, **dadurch gekennzeichnet**, daß an einer seitlichen Konsole (42) des - in bezug auf die Fahtrichtung F - vornliegenden, säulenförmigen Schenkels (16 b) ein Querträger 41 befestigt ist.

5. Kraftfahrzeug nach Anspruch 1 oder einem der weiteren Ansprüche, **dadurch gekennzeichnet**, daß mit dem Trägerteil (16) jeweils ein an einer Innenseite des Steges (17) angeordnetes Getriebelager (43) verbunden ist.

6. Kraftfahrzeug nach Ansprüchen 1 oder einem der nachfolgenden Ansprüche, **dadurch gekennzeichnet**, daß am Fuß (50) des hintenliegenden Schenkels (16 a) eine Aufnahme (39) für einen Stabilisator (40) angeordnet ist, der über eine festschraubbare Schelle (Schelle 52) gehalten wird.

## Claims

1. A motor vehicle with external lateral longitudinal supports in the region of a passenger space, which further longitudinal supports in the front of the vehicle and/or in the tail of the vehicle adjoin, the further longitudinal supports being in particular bent over at right angles, and members which reinforce the bodywork of the vehicle are connected to the longitudinal supports on the one hand and/or to an underbody or to underbody components on the other hand, wherein the reinforcing member comprises a first V-shaped strut extending in a horizontal plane in the longitudinal direction of the vehicle and is connected to a second V-shaped strut situated in a substantially vertical transverse plane, wherein the first strut is secured by the free ends thereof to the longitudinal supports and by the remote ends thereof to the second strut in a common coinciding area, and the said second strut is supported by the free ends thereof on the longitudinal supports; **characterized in that** the first V-shaped strut (6) comprises individual struts (8, 9) which are formed by two respective parts (6a, 6b) and the butting ends (35 and 35a) of which are held in a U-shaped support part (16) extending in the longitudinal direction of the vehicle.

2. A motor vehicle according to Claim 1, **characterized in that** the support part (16) comprises two column-like arms (16a, 16b) facing the individual struts (8, 9), and the web (17) connecting the two arms together is supported on the longitudinal support (1) and is connected thereto by way of fastening means (30, 31).

3. A motor vehicle according to Claim 1 or 2, **characterized in that** one part (6a) of the individual strut (8, 9) and a transverse strut (22) is connected at the same time to a base (50) of one arm (16a) situated at the rear - with respect to the direction of travel **F** - by way of a fastening bolt (36) and the other part (6b) at the front can be secured in a receiving means (51) of the arm (16a) by way of a further fastening bolt (34).

4. A motor vehicle according to Claim 1, 2 or 3, **characterized in that** a transverse support (41) is secured to a lateral bracket (42) of the front column-like arm (16b) with respect to the direction of travel **F**.

5. A motor vehicle according to Claim 1 or one of the further Claims, **characterized in that** a respective transmission bearing (43) arranged on an inside of the web (17) is connected to the support part (16).

6. A motor vehicle according to Claim 1 or one of the following Claims **characterized in that** a receiving member (39) for a stabilizer (40) held by way of a screwable clamp (clamp 52) is arranged on the base (50) of the rear arm (16a).

## Revendications

1. Véhicule automobile avec longerons latéraux extérieurs dans la région d'un habitacle, auxquels se rattachent d'autres longerons à l'avant et/ou à l'arrière du véhicule, qui sont pourvus en particulier d'un coude et des éléments renforçant la carrosserie du véhicule sont reliés d'une part aux longerons et/ou d'autre part à un dessous de caisse ou à des composants de dessous de caisse, l'élément de renfort étant constitué d'un premier entretoisement en V, qui s'étend dans un plan horizontal et dans la direction longitudinale du véhicule et étant reliés à un deuxième entretoisement en V, qui est situé dans un plan transversal à peu près vertical, le premier entretoisement étant fixé par ses extrémités libres avec les longerons et par ses extrémités opposées au deuxième entretoisement dans une zone de réunion commune et ce deuxième entretoisement prenant appui par ses extrémités libres contre les longerons, caractérisé en ce que le premier entretoisement en V (6) comporte deux entretoises individuelles (8, 9) constituées de deux pièces partielles (6a, 6b), dont les extrémités (35 et 35a) jointives sont maintenues dans un élément de support (16) en U, qui s'étend dans la direction longitudinale du véhicule.

2. Véhicule automobile selon la revendication 1, caractérisé en ce que l'élément de support (16) comporte deux branches (16a, 16b) en colonnes, dirigées vers les entretoises individuelles (8, 9) et la traverse (17), reliant entre elles les deux branches, prend appui contre le longeron (1) et est reliée à celui-ci par des moyens de fixation (30, 31).

3. Véhicule automobile selon les revendications 1 ou 2, caractérisé en ce qu'avec un pied (5) d'une branche (16a) située derrière - par rapport au sens de marche F -, une pièce partielle (6a) de l'entretoise individuelle (8, 9) ainsi qu'une entretoise transversale (22) sont reliée, simultanément par une vis de fixation (36) et l'autre pièce partielle (6b), située à l'avant, peut être fixée dans un logement (51) de la branche (16a), par une autre vis de fixation (34).

4. Véhicule automobile selon les revendications 1, 2 ou 3, caractérisé en ce qu'une barre transversale (41) est fixée sur une console (42) latérale de la branche (16b) en forme de colonne située à l'avant - par rapport au sens de marche F -.

5. Véhicule automobile selon la revendication 1 ou l'une des autres revendications, caractérisé en ce qu'un palier de transmission (43), placé sur un côté intérieur de la traverse (17), est relié avec l'élément de support (16).

6. Véhicule automobile selon la revendication 1 ou l'une des revendications suivantes, caractérisé en ce qu'un logement (39) pour un stabilisateur (40), qui est maintenu par un collier (collier 52) à visser, est placé sur le pied (50) de la branche (16a) située derrière.
